# EUROPEAN PATENT SPECIFICATION

(11) **EP 2 929 671 B1**
(45) Date of publication and mention of the grant of the patent: **22.02.2017**
(21) Application number: 13826744.8
(22) Date of filing: 06.12.2013
(51) Int. Cl.: H04L 29/06, H04W 12/06, G06Q 20/32, G06Q 20/18, G06Q 20/38, G06Q 20/40, G06Q 20/42, H04L 29/08, H04L 9/32

(54) **METHOD AND SYSTEM FOR AUTHENTICATING A USER USING A MOBILE DEVICE AND BY MEANS OF CERTIFICATES**
VERFAHREN UND SYSTEM ZUM AUTHENTIFIZIEREN EINES BENUTZERS MIT EINER MOBILEN VORRICHTUNG UND MITTELS ZERTIFIKATEN
PROCÉDÉ ET SYSTÈME POUR AUTHENTIFIER UN UTILISATEUR À L'AIDE D'UN DISPOSITIF MOBILE ET AU MOYEN DE CERTIFICATS

(30) Priority: 07.12.2012 HU P1200715
(43) Date of publication of application: 14.10.2015
(73) Proprietor: Microsec Szamitastechnikai Fejlesztö Zrt., 1031 Budapest (HU)
(72) Inventor: VANCZÁK, Gergely, H-1022 Budapest (HU)
(74) Representative: Kereszty, Marcell
(86) International application number: PCT/HU2013/000118
(87) International publication number: WO 2014/087179

(56) References cited:
- WO-A2-2005/067402
- WO-A2-2009/080999
- WO-A2-2010/056969
- US-A1- 2011 219 427
- US-A1- 2011 270 751

## Description

### TECHNICAL FIELD

The invention relates to a method and system adapted for authenticating a user in possession of a mobile device at an entity, particularly at a bank.

### BACKGROUND ART

Nowadays, the volume of online banking transactions is increasing dynamically. The number of frauds related to bank card data is also increasing, which poses a serious challenge for preserving the integrity of online payment systems.

These phenomena generate high demand for the continuous improvement of payment systems and other systems requiring high-level user authentication. Therefore, the prior art contains a number of solutions for improving the security of such systems.

In US 2011/0270751 A1 a system and authentication method for two-factor authentication is disclosed. The system according to the document comprises a service providing server, a terminal adapted for using the server, a mobile device, and, optionally, a server, adapted for storing various identification data, that is connected to both the mobile device and to the service providing server. According to US 2011/0270751 A1 the QR-code that is displayed on the terminal and scanned by means of the mobile device comprises a so-called transaction identifier or session ID, as well as the address of the service providing server. The so-called "authentication request" that is manifested in the QR-code may be received by the user by means of capturing an image of the terminal's screen using the camera of the mobile device, or in an e-mail message. To achieve identification by the service providing server, the mobile device passes identification data to the service providing server directly or from the server storing identification data.

In US 2012/0240204 A1 a system for authenticating a user is disclosed wherein the user receives data necessary for authentication by means of scanning a QR-code - or other suitable barcode - with his/her mobile device from a terminal connected to a service providing server, where the service providing server also utilises data received from the user to generate the QR-code. The data are sent to the mobile device in encrypted form and are decoded by the device. The user utilises these data for authentication at the authentication server connected to the service providing server. The authentication server verifies the received data applying a database of identifier data, and, depending on the result of the verification, authenticates or rejects the user.

In US 2012/0166309 A1 a system is disclosed wherein a terminal and a mobile device are used for banking transactions. The terminal and the mobile device communicate using barcodes, for instance, QR-codes. The solution disclosed in US 2012/0166309 A has the disadvantage that encrypted data communication is not applied for transferring data, and that confidential data are included in the QR-codes. Thereby, the QR-code includes the transaction data (card number, amount to be transferred, account number, etc.) on each occasion. Since QR-codes may be read by anyone using a suitable application, the confidential data comprised therein are also accessible to anyone.

According to US 2012/0166309 A1, the data to be confirmed (constituting confidential information) are transferred by means of the screen of a first device to a second device (for instance, to a mobile device from a terminal), which means that forged data may be passed to the second device in case the first device gets compromised. If the user is in a hurry, by routinely confirming the transaction on the mobile device, he or she may blindly confirm the process in which the forged data are involved. Without encrypted data communication all confidential information may be accessed and obtained over the network, and the information may later be used for frauds (e.g. for committing a CNP [Card Not Present] fraud) without the user's knowledge.

A serious disadvantage of the above cited solutions is that they involve transferring confidential data (albeit sometimes in encrypted form) between the individual components of the authentication system. It is therefore possible that the data may be captured over the network by an attacker who may then forge the captured data.

A signature provider connected to a mobile device and a service provider is described in the paper titled "3.2 Using mobile devices for digital signatures" by Zoltán Faigl, Sándor Imre, and Balázs Budai (Az m-kormányzat biztonsági kérdései és lehetőségei, Híradástechnika, vol. LX., no. 3, pp. 30-31, 2005.) According to the document the signature key and algorithm are stored by the signature provider, and the mobile device identifies itself to the signature provider, for instance using a PIN code.

Authentication systems based on scanning QR-codes are disclosed in US 2012/0005076 A1, US 2012/0066501 A1 and US 2012/0203646 A1. According to US 2012/0066501 A1 the system consists of a mobile device adapted for scanning a QR-code, a terminal and a service providing system, QR-code based authentication is applied in a system for digital signatures according to US 2012/0203646 A1. In US 2012/0116972 A1 an electronic payment system is disclosed which comprises a signature management system.

An authentication system is disclosed in US 2007/0130463 which, in addition to the mobile device and the service providing system, comprises a so-called "authentication and key system" capable for instance of synchronising keys. Systems allowing digital signaturing by multiple parties are disclosed in US 2011/0296191 A1 and US 2011/0314371 A1. Furthermore, systems for digital signaturing are disclosed in WO 2005/067402 A2, WO 2009/080999 A2 and US 2011/219427 A1. A system using short messages (SMS) for online transactions is disclosed in WO 2010/056969 A2. An exemplary usage of MQTT protocol is described in J. M. Robinson, J. G. Frey, A. J. Stanford-Clark, A. D. Reynolds, B. V. Bedi: Sensor Networks and Grid Middleware for Laboratory Monitoring, Proceedings of the First International Conference on e-Science and Grid Computing (e-Science '05), Computer Society, IEEE.

In view of the known solutions, there is a demand for improving known authentication methods and systems in order to increase the safety and security of such methods and systems.

### DESCRIPTION OF THE INVENTION

The primary object of the invention is to provide a method according to claim 1 and a system according to claim 13 which are free of the disadvantages of the prior art solutions to the greatest possible extent.

A further object of the invention is to provide a method and system that is capable of authenticating a user more securely, and of protecting confidential data to a greater extent compared to known solutions.

According to the invention we have recognised the advantage of the fact that commercially available mobile devices are capable of running applications (e.g. browsers) that allow the mobile device to carry out - e.g. of X.509 type - certificate based authentication. Applying PKI (Public Key Infrastructure) technology it is therefore possible to securely log in to web pages requiring two-sided (preferably SSL [Secure Sockets Layer]-type) authentication, wherein the mobile device and the web page mutually identify themselves using their respective X.509 certificates. PKI is a cryptography technology that allows secure communication over unsecured public networks and provides reliable user identification. As it is defined by the SSL cryptography protocol, public key certificates complying with the X.509 standard should be applied for encrypting the symmetric keys utilised during the establishment of the SSL channel; certificates based on other standards cannot be applied.

Based on the possibility of performing authentication utilising so-called smart mobile devices by means of these certificates, the method and system according to the present invention offer solutions that make business processes requiring two-factor authentication cheaper, more secure, and more efficient. The system and method according to the invention also offers a solution for the authentic digital signaturing of contracts online, by utilising the signing party's mobile device in a direct or indirect manner for authorising the documents.

By means of the method and system according to the invention, applying an authentication process based on certificates residing on mobile devices, a very strong PKI-based authentication may be implemented, which is one of today's most secure and most efficient authentication solutions.

According to the invention the highest level of security may be achieved when the private key belonging to the certificate residing on the mobile device exists only in a single instance, i.e. it is preferably generated in the mobile device itself. The way in which the keys are generated and managed is highly important for the level of security achievable by key-based processes. Devices running iOS (iPhone Operating System) have a built-in tool, the SCEP (Simple Certificate Enrolment Protocol), that is perfectly capable of generating keys, and of sending the requests for certificates to the certification provider authenticated using a previously negotiated password. To achieve the highest security level possible, functions of the SCEP should preferably be implemented on mobile platforms running other operating systems.

In the method and system according to the invention an authentication certificate (preferably of X.509 type) issued by a registered certification provider to the owner of the mobile device is available on the mobile device, the private key belonging to the certificate having been generated preferably on the mobile device itself.

The method and system according to the invention is based on authentication applying certificates residing on the mobile devices. The authentication is performed applying the HTTP data transfer protocol, preferably via an SSL channel. The characteristics of the SSL protocol are governed by the RFC 6101 standard.

The solution according to the invention significantly reduces the possibility of online frauds, and mitigates the risks of unauthorised bank card usage. Utilising smart mobile devices in the manner specified by the invention reduces the costs of existing two-factor authentication methods (SMS, token). Applying the method and system according to the invention alleviate the distrust of users towards online banking, and significantly decrease financial losses resulting from frauds.

Since the solution according to the invention does not involve handling and storing bank card data in any manner during the authentication process of online banking (card) transactions, the industry standard PCI DSS (Payment Card Industry Data Security Standard) is not relevant for it. However, the solution according to the invention complies with the banking security requirements laid down in PCI DSS.

The objects of the invention can be achieved by the method according to claim 1 and the system according to claim 13. Preferred embodiments of the invention are defined in the dependent claims.

### BRIEF DESCRIPTION OF THE DRAWINGS

Preferred embodiments of the invention are described below by way of example with reference to the following drawings, where
Fig. 1 is a block diagram illustrating an embodiment of the method and system according to the invention,
Fig. 2 is a block diagram illustrating another embodiment of the method and system according to the invention,
Fig. 3 is a block diagram of a still further embodiment of the method and system according to the invention, and
Fig. 4 illustrates the components of the embodiment of the method and system shown in Fig. 3.

### MODES FOR CARRYING OUT THE INVENTION

The accompanying drawings show components of both the method and the system according to the invention. In the following, the method according to the invention will be described first, with reference to some components of the system. The system according to the invention will also be described in a later section.

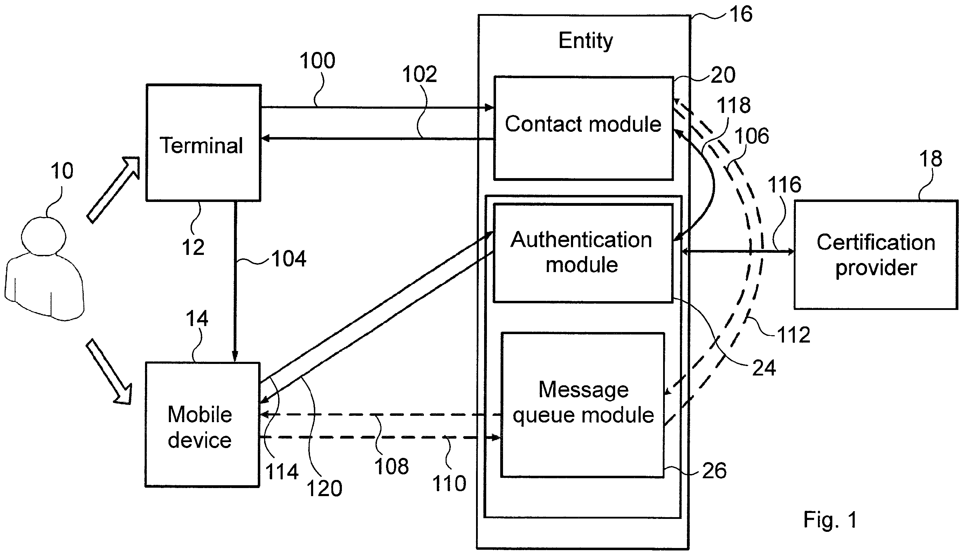

Fig. 1 illustrates an embodiment of the method according to the invention by means of a block diagram. The method according to the invention is adapted for authenticating a user 10 at an entity 16. In the context of the present specification, the term "entity" is used to refer to any enterprise, organisation, financial institution, state, or individual. As it will be demonstrated below in relation to the embodiments, authentication may have many purposes. Authentication may be required for confirming a user's login to an entity, for authorising a bank transaction, or for identifying a user for generating a digital signature. The authentication method according to the invention may of course be applied for other purposes.

In the course of the method according to the invention, a contacting of the user 10 made in a browser of a terminal 12 is detected by means of a contact module 20 of the entity 16 (a module allowing to make a contact with the entity 16), and a network address of the authentication module 24 of the entity 16 is sent by means of the contact module 20 to a mobile device 14 of the user 10 in an authentication message. Based on the network address, the mobile device 14 is capable of contacting the authentication module 24. Since the mobile device 14 is assigned to a specific user, the authentication message can be sent to the given user 10 by the entity 16.

The mobile device 14 is preferably a smart mobile device, for instance a smartphone, or a tablet. A certificate, issued by a certification provider 18 accepted by the entity 16, is available on the mobile device 14. The certificate has an at least 1024 bit-long, preferably 2048 bit-long, user private key, and unequivocally identifies the user 10. The private key is preferably generated on the mobile device 14, which implies that no copy of the key exists.

After the authentication message has been sent, the following steps are executed in the method according to the invention. Acceptability of an entity certificate of the authentication module 24 is verified by means of the mobile device 14 based on the network address, and acceptability of a user certificate of the mobile device 14 is verified by means of the authentication module 24, and in case the entity certificate and the user certificate are acceptable, the user 10 is authenticated at the entity 16 by establishing a communication channel between the mobile device 14 and the authentication module 24, whereas in case the entity certificate or the user certificate is not acceptable, the user 10 is rejected at the entity 16.

In the embodiment of the method according to the invention that is illustrated in Fig. 1, the step of verifying the acceptability of the entity certificate comprises verifying by means of the mobile device 14 validity of the entity certificate at an entity certification provider, and trustworthiness of the entity certification provider are verified by means of the mobile device 14. In case the certificate of the authentication module 24 was issued by a certification provider that is considered "not trusted" by the mobile device 14, the mobile device 14 interrupts the contacting to the authentication module 24. In this embodiment of the method, the step of verifying the acceptability of the user certificate comprises verifying by means of the authentication module 24 validity of the user certificate at the user certification provider, and trustworthiness of the user certification provider. In the embodiment according to Fig. 1, the user certification provider and the entity certification provider are both implemented as the certification provider 18. In the embodiment of Fig. 1, the authentication module 24 and the certification provider 18 are linked by a communication channel 116 that, by way of example, is implemented by internet network. The certificates of the mobile device 14 and the authentication module 24 need not be issued by the same certification provider. In case the user certification provider is different from the entity certification provider, then the mobile device 14 and the authentication module 24 mutually check the trustworthiness of each other's certification provider.

In the embodiment illustrated in Fig. 1, the entity certification provider corresponds to the entity private key of the authentication module 24, and the entity certificate is signed by the entity certification provider, the user certification provider corresponds to the user private key of the mobile device 14, and the user certificate is signed by the user certification provider.

In case both the entity certificate and the user certificate are acceptable, a certificate-based two-sided connection, preferably a two-sided SSL-type communication channel is established between the mobile device and the authentication module. Prior to establishing the communication channel, the certificates are mutually verified (trustworthiness and revocation checking utilising the OCSP (Online Certificate Status Protocol) or CRL (Certificate Revocation List) protocols), which is followed by a so-called handshake operation. No data exchange related to confidential data takes place between the mobile device and the authentication module before verifying the certificates.

A one-sided SSL communication channel is typically created between the terminal 12 and the contact module 20, which means that only the contact module 20 identifies itself to the mobile device 14 with its certificate when the channel is established. The reason why the contact module 20 and the authentication module 24 are not combined in a single module according to the invention is that a single given module - that is, the web page corresponding to the module - is capable of establishing either a one-sided or a two-sided SSL connection (communication channel). Since the known modules (web pages) requiring authentication establish a one-sided SSL connection to the user - implying that the users are not requested to authenticate themselves using a user certificate, as this would make it impossible to use an arbitrary PC or terminal for performing everyday tasks - the most expedient way of extending existing solutions is to implement certificate-based authentication utilising a separate module, the authentication module, which is integrated into known systems. Contrary to the terminals utilised for performing everyday administrative tasks, the user's mobile device is a private-use device, and therefore the certificate that may be assigned to it can be applied for two-sided SSL authentication.

A one-sided SSL connection is created when a HTTPS connection is established between a client (browser) and a web server, it is required that only the web server should identify itself using its certificate that is preferably a public key X.509 type SSL web server certificate issued to the web server's own domain, and is preferably signed by a certification provider trusted by both parties. The client will connect to the web server only if the web server certificate can be traced back to a trusted certification provider certificate, and the web server certificate is valid (has not expired, has not been revoked or suspended).

A two-sided SSL connection is created when a HTTPS connection is established between a client (browser) and a web server, it is required that both parties (client and web server) identify themselves using their own certificates that are preferably web server, as well as public key X.509 certificates. The client will connect to the web server only if the web server certificate can be traced back to a certificate of a trusted certification provider, and the web server certificate is valid (has not expired, has not been revoked or suspended). Also, the web server only allow the client to connect if the client authentication certificate was issued by a trusted party, and is valid (has not expired, has not been revoked or suspended).

According to the invention, the connection between the mobile device 14 and the authentication module 24 is created only after the certificates of the mobile device 14 and the authentication module 24 have been mutually verified. According to prior art solutions, the creation of the communication channel requires at most the verification of the certificate of the corresponding authentication module by the mobile device. However, for establishing a sufficiently safe communication channel between the mobile device and the authentication module it is not sufficient to verify the trustworthiness of the authentication server by the mobile device. In addition to that, the trustworthiness of the client should also be verified by the authentication server. Until recently, operation mobile devices were not prepared for this verification, i.e. mobile devices did not support certificate-based connections. As it has been mentioned above, devices running iOS support the use of certificates, but on mobile devices running other operating systems, such as Android, it is necessary to install a dedicated application. The solution that is currently most widespread in the world of banking involves the use of one-time passwords.

According to US 2012/0240204 A1, the communication channel between the mobile device and the authentication server is established after the authentication server has been verified by the client. After that, actual authorization data giving the permission of the user are exchanged via the channel, and these data are applied for identifying the client and for confirming the transaction.

Contrary to that, in the method according to the invention, authentication is performed as a consequence of the establishment of the communication channel, that is, the process of establishing the communication channel comprises the authentication.

The authentication method according to the invention is more advantageous than the prior art solution according to the document US 2012/0240204 A1, since the solution described therein does not include the verification of the client by the bank's authentication server before the communication channel is established. This shortcoming of the solution according to the document US 2012/0240204 A1 may be exploited by an attacker as follows.

By taking control of the client PC, or by inserting himself though the network between the PC and the service provider server according to the document (which is equivalent to the contact module of the invention), an attacker can replace the URL (Uniform Resource Locator), i.e. network address of the authentication server having a valid, trusted SSL certificate that is comprised in the QR code with its own network address that may to a large extent resemble the real URL of the authentication server. Thereby, according to the solution described in the document, the mobile device will consider the faked authentication server (the server of the attacker) as trustworthy, since it may have a valid certificate (anybody can obtain an SSL certificate for their own domain). After successfully establishing the one-sided HTTPS communication channel with the faked server, the client sends the authorisation data (OTP, PIN, data signed with key, etc.) to the attacker's server. The attacker may then establish the real one-sided SSL connection to the real authentication server, and may send the authorisation data specified by the client, thereby taking advantage of them.

In contrast to that, in the method according to the invention also the mobile device 14 has to present a valid certificate to the authentication module 24 for the communication channel to be established. That is, a two-sided SSL connection has to be established between the mobile device and the authentication module, which prevents the above described "man in the middle" attack as follows. In case, in a manner described above, the attacker sends a forged network address to the mobile device 14 in an authentication message as the network address of the authentication module, accepts from the mobile device authentication certificates issued by the same trusted certification provider, for instance for establishing a connection, e.g. an HTTPS communication channel, and the attacker can obtain the indirect authorisation data from the user after the communication channel has been established. However, the attacker cannot take advantage of the obtained authorisation data, as he/she cannot connect to the real authentication module impersonating the user (that is, using the user private key and certificate stored on the mobile device), since he/she does not possess the user private key.

In the process described in the document US 2012/0240204 A1 it is therefore sufficient to hack a PC, for instance a terminal (that may for example be located in an internet coffee) for an attacker to become capable of relatively easily attack the authorisation process. In the solution according to the invention, however, the attacker cannot take advantage of the obtained data in case only one of the parties is compromised.

In the embodiment illustrated in Fig. 1, a login contacting is initiated at the contact module 20 via a communication channel 100, and thus the terminal 12 is displaying a login interface of the entity 16. The communication channel 100 may for instance be established utilising an internet network.

In the method according to the invention, both the terminal 12 and the mobile device 14 are in some way or other (Wi-Fi, 3G, GPRS, etc.) connected to the internet. The methods (entity services) according to the embodiments of the invention may be carried out such that the users and clients access individual modules of the entity 16 over the internet.

According to the present embodiment the user 10 (possessing a mobile device 14) first logs in using the browser of the terminal 12 to a primary web page of the entity 16 (that is, to the contact module 20) that requires simple login name/password based authentication using a - preferably one-sided - connection using the HTTPS data transfer protocol.

Following the successful login name/password based authentication the user 10 is not yet granted access to the contact module 20 by the entity 16. Instead, the network address, that is, the URL of the authentication module 24 is sent back by the entity 16. Consequently, both the contact module 20 and the authentication module 24 may be implemented as a respective web page. The user then opens the page at the network address of the authentication module 24 using his/her mobile device 14. Connection to the authentication module 24 requires a - for instance, RSA-type - private key, and a corresponding - for instance, X.509-type - authentication certificate issued to the user's name. Both the private key and the certificate are stored on the mobile device. As it is presented below, the link sent by the contact module 20 comprises the network address of the authentication module 24 (the URL of the web page thereof: https://<secondary-website>), and preferably the value of the transaction identifier belonging to the login name/password-based login performed using the contact module.

The URL required for authorising the authentication is therefore built up as: https://<secondary-website>/?trid=ϕ(trid)
where
- ϕ is a symmetric key of the bank/organisation
- trid is an identifier of the transaction, and
- ϕ(trid) is the trid encrypted using ϕ.

Encryption of the transaction identifier becomes necessary only in case also the transaction identifier (which may be a random number) is intended to be hidden.

The URL may be transferred to the mobile device 14 in different ways according to an example not forming part of the invention. The URL may thus be embedded in an authentication message as follows.

According to an example, the authentication message may be a QR-code, in which case the network address is sent to the mobile device 14 carrying out the following steps: After the username/password pair has been specified, the URL of the authentication module of the entity 16 that is requesting the certificate-based authentication of the SSL client, as well as the current transaction identifier, are made available to the user by the contact module 20 in a QR-code displayed on the screen of the terminal 12. The QR-code is therefore passed to the terminal 12 by the contact module 20; and then the code is displayed on the display of the terminal, and, is captured by the image making device of the mobile device 14, and, therefore, it is transferred to the mobile device 14. Thus the authentication message is sent to the mobile device 14 by the contact module 20. According to Fig. 1, the QR-code is sent to the terminal 12 via a communication channel 102, e.g. over internet network, and it is then transferred utilising communication channel 104, that is, as described above, by taking a photo of the QR-code.

The message of the contact module 20 arrives to the mobile device 14 as a MQ (Message Queue) -type, preferably MQ-TT (MQ Telemetry Transport) -type message. Message queues implement an asynchronous communication protocol, which means that the sender and the receiver of the message do not necessarily have to connect to the message queue simultaneously. The message is sent by the sender to the message queue, where it is stored and is waiting for delivery until the receiver receives it from the message queue. Messages received by the message queue may be limited in size, and the time of storing a given message in the queue may also be limited.

There are multiple types of MQ protocol (e.g. AMQP, MQTT, STOMP), all having a number of different implementations (such as IBM WebSphere MQ, Apache ActiveMQ, RabbitMQ), but the basic functionality, namely, the storage of messages in a delivery queue, is the same.

MQTT is a so-called "featherweight" protocol. Its most important features are that it can be implemented utilising a minimum amount of code and that it has extremely low bandwidth demand. These characteristics render it ideal for continuous communication with mobile devices.

The MQTT protocol is utilised by different messaging platforms for communicating with and receiving messages from servers, but it is also applied in pacemakers for the remote monitoring of circulation and cardiac activity, for monitoring and controlling oil pipelines, and for the automated monitoring of the level of rivers. The MQTT protocol also works over an encrypted SSL channel.

In that case, the smart mobile device applies a suitable client application to connect - by means of MQ protocol implemented utilising different-direction communication channels 108, 110 shown in Fig. 1 - to a message queue module 26 of the entity 16. Connection to the message queue module 26 is usually performed applying some sort of authentication (such as username/password-based authentication). The servers applied for serving the contact module 20 and the authentication module 24 of the entity 16 are capable of sending messages via the message queue module 26 to the connected mobile devices 14. Fig. 1 shows the bidirectional communication channels 106, 112 applied for connecting the contact module 20 and the message queue module 26. In the embodiment illustrated in Fig. 1, the authentication module 24 is indirectly capable of sending message queue type messages (in the following: MQ messages) via communication channel 118.

An advantageous feature of the invention applying message queue type messages as authentication message is that an electronically signed reply (return receipt) can be sent by the mobile devices 14, signed by the signature key thereof, to the contact module 20 after an authentication message sent by the entity is received (or is read by the client). It is provided by this solution that the entity 16 always possesses an electronically signed proof (signed using the user key stored on the mobile device) related to that the authentication message has been sent. Thus, the entity always has a genuine proof that helps to avoid future debates. The automatic sending of return receipts of the authentication message is not solved for according to known solutions.

Applying the message queue module 26, the entity 16 may contact the users directly, without involving a third party in the process - provided that the users are logged in to the suitable application of the entity using their mobile devices. That way, sending return receipts by the user/client for the messages sent by the entity 16 may be made required. The application of the entity may be configured such that the mobile device should send an electronically signed return receipt to the server of the entity 16 which undeniably proves that the message has been received.

In an example not forming part of the invention, the authentication message - and the URL of the authentication module embedded therein - may be transferred to the mobile device 14 utilising an SMS (short text message). SMS service providers do not warrant for the immediate sending and delivery of messages.

In an example not forming part of the invention, the authentication message may also be transferred in a so-called "push message". Service providers do not warrant for the immediate sending and delivery of messages also in the case of push messages. In an example not forming part of the invention, e-mail messages may also be utilised for transferring the authentication message.

A fall-back structure may also be devised for messaging, meaning that when a messaging channel is not available, it will be replaced by the messaging channel of secondary preference. To illustrate the fall-back structure, Fig. 1 shows communication channels 102, 104 adapted for transferring the QR-code, and also communication channels 108, 110, 106 and 112, adapted for transferring the MQ message.

After the authentication message sent in an MQ message is received, the mobile device 14 connects to the received network address, namely, to the network address of the authentication module 24 using its private key and the corresponding X.509-type authentication certificate. According to Fig. 1, this connection - the opening of the network address of the authentication module 24 - is implemented utilising a communication channel 114. The communication channel 114 may for instance be established utilising an internet network.

The authentication module 24 subsequently performs a revocation check on the client certificate at the certification provider 18 utilising preferably OCSP or CRL. In case the certificate belonging to the mobile device 14 is invalid (has been suspended, revoked, or the check has failed), an error message is sent back to the mobile device 14 via communication channel 120, and to the contact module 20 via communication channel 118.

In case the entity 16 communicates with the mobile device via an MQ connection, the mobile device may also be notified in an MQ message sent via communication channels 106, 108 of the failed authentication.

In case the certificate residing on the mobile device is valid, and preferably if the data included therein have been accepted and the transaction identifier indicates successful authentication by the contact module 20, a message indicating successful authentication is sent by the authentication module 24 to the mobile device 14 via communication channel 120. Like the communication channel 114, communication channel 120 is preferably implemented utilising internet network. In case the entity 16 communicates with the mobile device 14 via an MQ connection, the mobile device is also notified in an MQ message of the successful authentication. As a last step after successful authentication, the user is logged in by the contact module 20 of the entity 16.

Fig. 1 may also illustrate such an embodiment of the authentication method according to the invention wherein the authentication of the user is required for approving a transaction (for instance, a bank transfer). The embodiment of the invention applied for that is described below.

In an initial state of the transaction approval step the user 10 having the mobile device 14 is logged in at the contact module 20 of the entity 16 in the browser of the terminal 12. In the present embodiment, the entity 16 is preferably a bank. The online interface of the contact module 20 can be accessed utilising a one-sided HTTPS communication channel. The logged-in user 10 initiates a transaction (for instance, a money transfer), and fills in the transaction form. On the next page, information on the transaction to be approved is displayed by the bank, and the user confirms the transaction data in the browser of his/her computer.

The bank then sends the network address of the authentication module in an authentication message to the mobile device 14, and the user opens the message using his/her mobile device 14. In a manner analogous to what was described above, the private key and the certificate belonging thereto (stored on the mobile device 14) are required for connecting to the authentication module 24 (the difference is that in this embodiment the purpose of the authentication applying the authentication module 24 is the approval of the transaction). Similarly to what was presented above, the link sent by the contact module 20 comprises the URL (https://<secondary-website>) of the authentication module 24, as well as the value of the transaction identifier belonging to the transaction.

No confidential data related to the transaction can be deciphered in any way from the link sent to the mobile device 14, since it only comprises the transaction identifier, which may even be encrypted using the bank's symmetric key.

In this embodiment as well, the authentication message is transferred to the mobile device 14 via the channel described above (MQ message).

Next, also in a manner similar to the above, the mobile device 14 uses its private key and the certificate belonging thereto to connect to the authentication module 24, which then performs a revocation check on the client certificate. In case the certificate is invalid (has been suspended, revoked, or the check has failed), an error message is sent back to the mobile device 14 and to the contact module 20.

In case the certificate is valid, and preferably in case the authentication has been accepted by the contact module 20 based on the data comprised in the certificate and on the transaction identifier (trid), the transaction data are sent back to the mobile device 14 by the authentication module 24 in the next step. In this phase the transaction has not yet been approved on the mobile device 14.

At this time the user may review the data of the transaction. According to an embodiment the bank requires the client, preferably via the authentication modules 24, to confirm some of the transaction data by re-entering them (for instance, in case of a bank transfer, the sum to be transferred and/or the target account number may have to be entered again). If the client skips this step on the mobile device 14, or enters incorrect data, the transaction will fail. In this embodiment of the method according to the invention, the problem of "blind approval", that is, the possibility of the client approving the transaction data without actually checking them, is eliminated. The so-called "man in the middle" attack may also be prevented applying this embodiment of the method: in case the terminal 12 becomes controlled by an attacker, and the transaction data are forged using the "man in the middle" technique, then the user is not able to even accidentally confirm the forged transaction via the approval link sent by the bank. This is not true for entering one-time passwords sent in SMS messages, or passwords generated using tokens. (In case of the former, there is no way to "force" the client to verify the data, since the solution involving SMS is a passive one.)

In case the bank communicates with the mobile device 14 via an MQ connection, the mobile device is also notified in an MQ message of the successful approval of the transaction.

In the above described step it is also possible to completely refuse the transaction. When MQ-based communication is applied, a message is sent to the mobile device 14 indicating that the transaction has been cancelled by the client.

In case of a successful approval, a refusal, or if the time limit for approval has been reached, a message is displayed in the browser of the terminal 12 by the contact module 20 in the user interface area corresponding to the contact module 20.

In an embodiment, a user 10 requests a service at the contact module 20 of the entity 16 via the browser of the terminal 12 by filling in an electronic form, where the mutual signing of a contract by the entity 16 and the user 10 is required. The contract can be prepared dynamically at the contact module 20 of the entity 16, or it can be a previously prepared contract. Utilising its own signature key, the contact module 20 of the entity 16 electronically signs the contract completed using the data entered by the user (client), and optionally provides it with a certified timestamp.

Then, in case the user 10 has already been authenticated and logged in applying the method according to the invention as described above, the certificate of the user is inserted by the entity 16 to the document thus produced, where the user certificate is provided with the signature key of the user, and is fetched in the background from the key providing module 28 connected to the entity 16 utilising information that unambiguously identifies the user at the key providing module 28. To accomplish that, the entity 16 should know which key provider provides the user's 10 currently applied signature key (it may be specified in advance by the user 10).

Therefore, in this embodiment a contract to be signed by the user 10 and the entity 16 is prepared utilising data requested from the user after logging in, and then the contract is signed utilising the signature key of the entity 16 and the signature key of the user 10, the latter being stored in the key providing module 28. The signing operation, performed in the key providing module 28, is approved by the user 10 applying an authentication certificate residing on the mobile device 14.

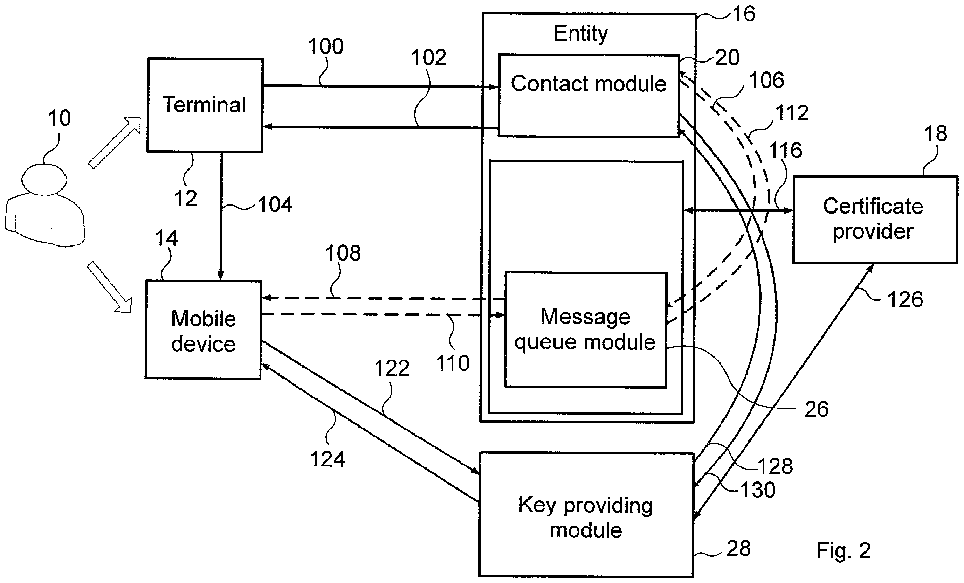

Fig. 2 illustrates an embodiment of the method according to the invention wherein authentication performed utilising the inventive method is required for preparing the digital signature of the user. In this embodiment the role of the authentication module is performed by the key providing module 28.

According to Fig. 2, it is possible to select the signer certificate of the user 10 even when the key providing module 20 of the entity 16 is accessed by the user 10 anonymously or after an authentication that is not certificate-based. In that case, the signer certificate is requested from the key providing module 26 not by the entity 16 but rather by the mobile device 14 of the user 10.

In this embodiment the contact module 20 is applied for sending the network address (URL) of the key providing module 28 to the mobile device 14 in an authentication message so that the signing operation can be performed. The network address parameter comprises the address of the entity 16 where the key providing module 26 should send the signer certificate of the user 10. Next, the mobile device 14 is redirected to the contact module 20 of the entity 16, where the signing operation continues.

The entity 16 then generates a hash of the document that has been complemented with its signer certificate and prepared to be signed by the user 10. The type of the applied hash algorithm (sha1, sha256, sha384, sha512) should preferably be indicated at the beginning of the generated hash value. The document to be signed that is identified by the hash therefore already comprises the signer certificate of the entity 16.

In the present embodiment the role of the authentication module is performed by the key providing module 28. Accordingly, the link to be sent to the mobile device 14 in the authentication message is generated by the contact module 20 as follows. The link comprises the address of the website of the key providing module 28 that is requesting the authentication certificate (that is, the network address).

The following GET parameters are specified in the URL:
- id: a unique identifier of the entity 16 that is known to the key providing module.
- par: the parameters that are encrypted using a symmetric key (ϕ) known to the entity 16 and to the key providing module 28.
   ∘ hash: hash of the document to be signed
   ∘ trid: identifier of the transaction
   ∘ userid: a unique identifier of the user 10 that is known to the entity 16 and to the key providing module 28, and
   ∘ optionally, additional parameters may also be specified
https://<address of key provider>/?id=<id>&par=ϕ(par)

It should be emphasised here that confidential data, such as the hash, are sent in encrypted form. It is to be noted that the length of the generated link cannot be longer than what can be comprised in the authentication message.

In a manner similar to what was described above, the generated link (the network address) is made available to the user 10 by the contact module 20 in an MQ message. In case message queue type messages are applied, the above mentioned communication channels 100, 102, 104, 106, 108, 110, 112 are utilised.

The user opens (e.g. in a browser or other application) the link received in an message queue type message. The link is received by the mobile device in an MQ message, and it sends a signed return receipt related to the received MQ message via the message queue module 26, using the signature key preferably stored on the mobile device 14.

The link thus transferred to the mobile device 14 is opened in an application-typically in a browser - that supports certificate-based authentication. The appearing web page is the web page of the key providing module 28 requesting certificate-based authentication.

Authentication is then performed on the mobile device 14 in the above described manner utilising a certificate, the key providing module 28, and also a communication channel 126 between the key providing module 28 and the certification provider 18. The key providing module 28 thus performs a revocation check on the user certificate using OCSP (Online Certificate Status Protocol) or a CRL (Certificate Revocation List) in cooperation with the certification provider 18. In case the certificate is invalid (has been suspended, revoked, or the check has failed), or is valid but no corresponding signature key or encryption key exists in the key providing module 28, an error message is sent back to the mobile device 14 and to the contact module 20 by the key providing module 28.

If the authentication is successful, that is, the two-sided certificate verification has been successfully completed, the signature key of the user 10 (stored in the key storage module attached to the key providing module 28) is unambiguously identified by the key providing module 28 applying the user certificate. The key storage module is preferably implemented as a so-called HSM (Hardware Security Module). In the next step the key providing module 28 reads from its database the symmetric encryption key or password being common with the entity 16 utilising the non-encrypted "id" parameter that was previously sent together with the link, decrypts the encrypted GET parameter, and uses it to generate the other required parameters.

Utilising the key stored in the specified HSM module and applying certificate-based authentication, the key providing module signs the hash deciphered from the encrypted GET parameter. Next, the key providing module 28 notifies via an HTTPS connection the entity 16 specified in the GET parameter that it possesses a hash to be passed to it, and that the hash was signed by a user 10 of the entity 16.

In order to be able to receive the data signed by the user, the entity 16 has to prove to the key providing module 28 that the user 10 had been requested to sign the document belonging to the hash by the entity 16 itself.

To do that, it send the hash belonging to the given document to the key providing module 28 embedded in a document (txt file, etc.) signed by its own key. It is preferred to specify in the document thus signed the transaction of the user to which the given hash belongs.

The document comprising the hash signed by the entity 16 is verified by the key providing module 28. In case the signature is found to be valid and the hash comprised in the signed document is the same as the hash passed by the user 10 in the GET parameter, it is proven that the signing of the hash had been requested by the entity 16, and therefore the hash was not tampered with. The key providing module 28 then passes the hash signed by the user 10 to the entity 16. The hash electronically signed by the entity 16 is archived by the key providing module as evidence. Utilising this document, on a later occasion it may be proven by the key providing module 28 that it signed using the user's 10 key a hash belonging to a document the signing of which had been requested by a third party, the entity 16.

The user 10 is then informed of the successful or unsuccessful signing operation by the contact module 20 preferably both via the terminal 12 and the message queue module 26 (if such a communication channel exists between the bank/organisation and the client's mobile device).

The steps carried out applying the present embodiment can be summarised as follows: a contacting for document-signing is detected by means of the contact module 20; a contract signed by the entity 16 and to be signed by the user 10 utilising data requested from the user 10, is prepared; and a hash of the contract is generated. In the present embodiment, the authentication module is the key providing module 28. According to the present embodiment, network address of the key providing module 24 is then sent to the user's 10 mobile device 14 in an authentication message by means of the contact module 20, and the encrypted hash is also sent in the authentication message. Next, in case the communication channel between the mobile device 14 and the key providing module 28 is successfully established (that is, in case of a successful authentication), the encrypted hash and an identifier of the entity 16 are sent to the key providing module 28, the entity 16 is identified by the key providing module 28 and the encrypted hash is decrypted by means of the key assigned to the entity 16, and then the hash is signed utilising the user's 10 key available to the key providing module 28, and, verifying with the entity 16 that the hash was received from the entity 16, the hash is sent from the key providing module 28 to the entity 16.

According to a further embodiment, the signature process may also be carried out by signing the hash utilising the signature key residing on the client's smart mobile device. In this case there is no need for an external key provider, while the contact module 20 of the entity 16 remains responsible for generating the document to be signed in a suitable signable format, for generating the hash, and for inserting the signed hash and closing the completed document.

In this embodiment, the mobile device 14 communicates with the key providing module 28 via communication channels 122 and 124; the communication channel 122 being directed from the mobile device 14 towards the key providing module 28, and the communication channel 124 in the reverse direction. The key providing module 28 is connected to the contact module 20 via communication channels 128 and 130; the communication channel 128 being directed from the key providing module 28 towards the contact module 20, and the communication channel 130 in the reverse direction.

The embodiment detailed above implements a distributed digital signature functionality that allows both the user and the entity to sign the documents (for instance, contracts) that they own. The most important feature of a distributed digital signature scheme is that the entity never possesses the client's private signature key that the client stored either on a smart mobile device or at a trusted third party (in the above described embodiment, the key providing module). During the signature making operation, the document to be signed is prepared by the entity in a format complying with a digital signature standard (e.g. XAdES, PAdES). The signature operation itself is performed not by the entity but by the user's mobile device, or by a trusted third party (the key providing module) after authentication utilising a certificate residing on the mobile device. The user's mobile device receives only the hash of the document to be signed that is generated by the entity. The hash is signed either using the signer's private key stored on the mobile device, or, after passing it to the key providing module, using the HSM-protected hardware key stored therein. Since it receives only the hash, the key providing module will never get possession of the contents of the documents to be signed. The signed hash is sent back to the entity either from the mobile device or from the key providing module, the entity inserting it to the unfinished document that has been prepared for signing. The client's signature operation is thus completed, and the entity may insert further signatures or timestamps. For each stage of the signature process, certificate-based authentication is requested by the entity from all parties. In addition to providing secure user identification, applying the entity's signing functionality allows performing trustworthy administration based on remote electronic signature.

The method according to the invention may also be applied for document decryption/decoding. In that case the decryption/decoding operation is reduced to an authentication performed with the method according to the invention.

In the present embodiment, the user/client possesses a document encrypted for him/her, which he/she received e.g. attached to an e-mail message, or in some other way. In the first, as contacting step of the document decryption process, the user passes (uploads) the document to be decrypted to the contact module, that is, for instance, sends it in an e-mail message. Next, the contact module extracts from the uploaded encrypted document the symmetric key applied for encrypting the document. The symmetric key has been encrypted using the user's encryption certificate. The link that is to be sent to the user's mobile device is generated by the contact module. Similarly to the above described case, the authentication module is the key providing module. The link comprises the network address of the authentication module. The following GET parameters are specified in the URL:
- id: an identifier of the entity
- par: parameters that are encrypted using a symmetric key (ϕ) known by the entity and the key provider:
   ∘ encryptedkey: a symmetric key encrypted using the user certificate
   ∘ trid: an identifier of the transaction
   ∘ userid: an identifier unique to the user (e.g. e-mail address)
https://<address of key provider>/?id=<id>&par=ϕ(par)

The generated link is sent to the user by the contact module in an authentication message. Opening the link utilising his/her mobile device, the user initiates a connection to the key providing module.

Authentication is performed via an internet connection utilising the authentication certificate residing on the mobile device, as well as the entity certificate. In case of a successful authentication, the key providing module utilises the user certificate to unambiguously identify the user's decryption key that is preferably stored in an HSM module. In the next step the key providing module reads from its database the symmetric key or, optionally, password shared with the entity utilising the non-encrypted "id" parameter that identifies the contact module, decrypts the encrypted GET parameter, and uses it to generate the other required parameters. The encrypted symmetric key, obtained from the encrypted GET parameter, is decrypted utilising the decryption key stored in the HSM module.

The decrypted symmetric key is subsequently forwarded via an HTTPS connection from the key providing module to the contact module specified in the GET parameter.

The contact module then uses the symmetric key received from the key providing module to decrypt the user's document, and makes the document downloadable via an HTTPS link. The link is sent to the user either via the terminal or in an e-mail message. The decrypted document thereby becomes available to the user.

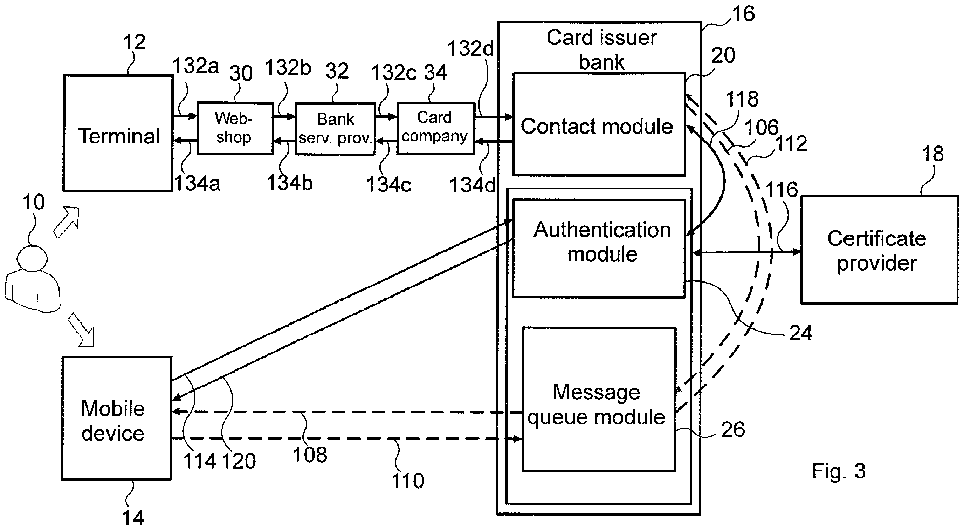

A still further embodiment of the invention is illustrated in Fig. 3. According to this embodiment the entity 16 is a card issuer bank 25, and a contacting of a user 10 by submitting credit card data via the terminal 12 on a payment interface of a web shop, is detected by means of the contact module 20 of the card issuer bank 25 via a server 30 of the web shop, a server 32 of the banking service provider of the web shop, and a server 34 of a credit card company. In this embodiment, a message queue type message is applied as authentication message. The present embodiment excludes the application of QR-codes as authentication message, since the terminal 12 is applied for displaying the payment interface of the webshop that is not capable of displaying a QR-code.

In this embodiment, therefore, the user 10 (client) possessing the mobile device 14 initiates a card payment transaction in the browser of the terminal 12. The transaction information of the card payment entered by the user in the webshop interface are passed via the server 32 of the banking service provider bank of the webshop, and the server 34 of the credit card company, finally arriving to the card issuer bank 25.

The card issuer bank 25 verifies the data related to the card payment: makes sure that the card exists and has funds, and that it has not been blocked. If the verification is positive, then before confirming the transaction, an authentication message is sent to the user, notifying him/her to confirm the card payment. The authentication message can be sent utilising MQ protocol. In case an MQ message is sent, the card holder's smart mobile device should be connected to the message queue module 26 of the card issuer bank 25.

The authentication message is applied for sending the network address of the authentication module 24 to the mobile device 14. The passed URL does not comprise any information on the content of the card transaction, only a transaction identifier made up of random numbers, which may be used for reading the data related to the card transaction on the mobile device 14 only in case of successful certificate-based authentication.

The authentication URL that is sent in the authentication message and is applied for confirming the transaction is built up as follows: https://<secondary-website>/?trid=ϕ(trid)
where
ϕ is a symmetric key of the issuer bank
trid is a transaction identifier (such as the identifier of a card payment transaction) ϕ(trid) is the trid encrypted using ϕ.

After sending the authentication message the mobile device 14 utilises its private key and the certificate belonging to it to connect to the authentication module 24 of the card issuer bank 25 that requests certificate-based authentication, and that can be found at the network location sent in an MQ message.

In a manner similar to what was described above, the authentication module 24 of the card issuer bank 25 performs a revocation check on the client certificate (residing at his/her mobile device 14) utilising OCSP or CRL. Also, the mobile device 14 verifies the certificate of the authentication module 24. In case the certificate of the mobile device is invalid (has been suspended, revoked, or the check has failed), an error message is sent back to the smart mobile device. In case the card issuer bank 25 communicates with the client's mobile device via an MQ connection, the mobile device is notified also in an MQ message of the unsuccessful authentication.

If the confirmation fails for some reason (due to an invalid certificate, rejection, or a time limit), the refusal message is sent by the issuer bank to the server 30 of the webshop via the server 34 of the credit card company and the server 32 of the banking service provider. The result of the card payment transaction appears in the display screen of the terminal 12.

In case the authentication is successful, and in case the data comprised in the certificate, and - based on the identifier of the card transaction - the authentication have been accepted by the contact module 20 of the card issuer bank 25, the card transaction data are sent back to the mobile device 14 by the authentication module 24 of the card issuer bank 25. At this stage the transaction has not yet been approved on the mobile device.

After reviewing the information related to the card payment transaction, the client may confirm or reject the card payment transaction via the authentication module 24 utilising the mobile device 14 (e.g. the browser thereof).

In case the card issuer bank 25 communicates with the mobile device via an MQ connection, the mobile device is also notified in an MQ message of the successful approval of the transaction, or that the transaction has failed (due to refusal).

The card issuer bank sends a notice of the event of confirmation or refusal of the card payment transaction by the client to the server of the merchant via the information systems of the credit card company 34 and the service provider bank 32. The result of the card payment transaction appears in the user interface of the webshop.

According to the present embodiment, in case a communication channel is established between the mobile device 14 and the authentication module 24, the payment data of the webshop are sent to the mobile device 14, and information on the authorization or rejection of the payment data by the user 10 is received.

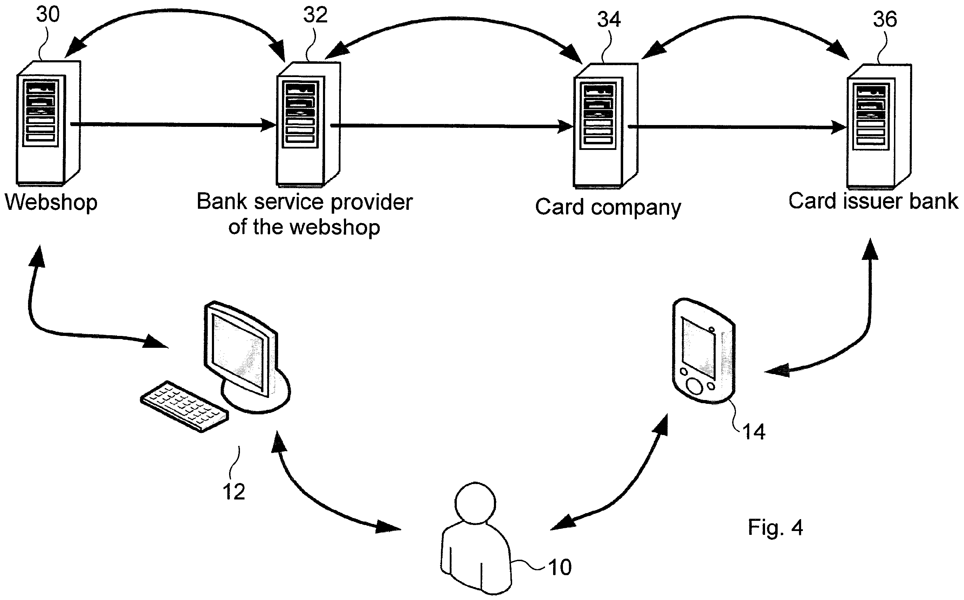

The embodiment of Fig. 3 is illustrated also in Fig 4. According to prior art solutions the card issuer bank verifies the card data and fund status, and, in case of a positive verification, confirms the transaction without requesting a confirmation from the card holder. By the nature of the online payment process, in case the client's card data are compromised, the attacker may abuse the card without the client even noticing it, since the card remains in the client's possession.

The authentication method according to the invention allows the confirmation of the payment by the client using an alternative channel, while it provides that of the participants of the card payment process only the servers of the card issuer bank 25 and the client's mobile device have to be involved in the authentication process. Other components of the chain do not perceive that a second authentication process is being carried out in the background. The key question is the manner in which the server of the card issuer bank establishes connection to the client's smart mobile device after the data related to the given online payment transaction have been received by the server, since the time limit for confirmation is extremely short. Messaging techniques involving SMS or push messages may seem an obvious solution, but they both have the following disadvantages:
- By their nature, these techniques do not guarantee that the message is sent immediately, and it will be received by the client's mobile device in a short time. No SMS provider guarantees that.
- In both cases, an external third party (such as an SMS provider) is required for relaying the messages, which makes the issuer bank dependent to a large extent on these parties.
- None of these solutions provide any proof to the sender party (the card issuer bank) that the message requesting confirmation of the authorisation has really been sent to the client. This may cause serious difficulties to the issuer bank if a debate occurs.
- The application of SMS messages may cause significant additional transaction costs.

The invention wherein the authentication message is transferred in a MQ message eliminates these disadvantages. The card issuer bank 25 may send a message in a synchronous manner to the mobile device connected via the message queue module 26 without involving an external service provider. Similarly to the bank transfer transaction, the message comprises the network address of the authentication module 24, the identifier corresponding to the card transaction being included in the message as a parameter. No sensitive data are comprised in the MQ message. The transaction may be viewed, confirmed, or rejected on the mobile device only after a successful authentication. The signature key residing on the mobile device may be applied for sending a return receipt of the MQ message received from the card issuer bank. The return receipt may be archived by the issuer bank's system as a proof of the transaction.

In addition to online banking, the solution according to the present invention may be applied for completely eliminating frauds related to cash withdrawal from ATM-s that are capable of displaying QR-codes.

In case the mobile device is lost or gets stolen, the process of blocking the device is the same as the blocking process of lost/stolen bank cards. As soon as the user reports his/her mobile device lost or stolen, the certificates residing on the device are revoked immediately so that no further transaction can be confirmed using them.

The solution according to the invention may significantly speed up banking processes for clients. Clients possessing mobile devices involved in the method may authorise banking contracts at home, using their digital signatures. The authentication certificates installed on the mobile device may also be applied for connecting to VPN networks. The solution according to the invention supports confirming transactions that require multiple authorisers.

An embodiment of the invention relates to a system for authenticating a user at an entity. The system according to the invention comprises a contact module 20 adapted for detecting a contacting of a user 10 to the entity 16, a terminal 12 adapted for receiving the contacting initiated by the user 10 with the contact module 20, an authentication module 24 adapted for authenticating the user 10, and a mobile device 14 adapted for receiving a network address of the authentication module 24 in an authentication message from the contact module 20. In the system according to the invention the mobile device is adapted for verifying acceptability of an entity certificate of the authentication module 24 based on the network address, and the authentication module 24 is adapted for verifying acceptability of a user certificate of the mobile device 14, and in case the entity certificate and the user certificate are acceptable, the user 10 is authenticated at the entity 16 by the system by establishing a communication channel between the mobile device 14 and the authentication module 24, whereas in case the entity certificate or the user certificate is not acceptable, the user 10 is rejected at the entity 16.

The invention is, of course, not limited to the preferred embodiments described in details above, but further variants, modifications, changes, and developments are possible within the scope of protection defined by the claims.

## Claims

1. A method for authenticating a user (10) at an entity (16), comprising the steps of
- detecting, by means of a contact module (20) of the entity (16), a contacting of the user (10) made in a browser of a terminal (12), and
- sending, by means of the contact module (20), a network address of an authentication module (24) of the entity (16) to a mobile device (14) of the user (10) in an authentication message,
**characterised by**
- using a message queue type message as the authentication message, said message is sent via a message queue module (26) corresponding to the entity (16), and a return receipt signed by a key of the user (10) is sent from the mobile device (14) to the contact module (20) after the message queue type message is received by the mobile device (14) being connected to the message queue module (26),
- verifying acceptability of an entity certificate of the authentication module (24) by means of the mobile device (14) based on the network address, and verifying acceptability of a user certificate of the mobile device (14) by means of the authentication module (24), and
- in case the entity certificate and the user certificate are acceptable, authenticating the user (10) at the entity (16) by establishing a communication channel (114, 120, 122, 124) between the mobile device (14) and the authentication module (24), whereas in case the entity certificate or the user certificate is not acceptable, rejecting the user (10) at the entity (16).

2. The method according to claim 1, **characterised in that**
- the step of verifying the acceptability of the entity certificate comprises verifying by means of the mobile device (14)
- validity of the entity certificate at an entity certification provider (18), and
- trustworthiness of the entity certificate provider (18),
- the step of verifying the acceptability of the user certificate comprises verifying by means of the authentication module (24),
- validity of the user certificate at the user certification provider (18), and
- trustworthiness of the user certification provider (18).

3. The method according to claim 2, **characterised in that**
- the entity certification provider (18) corresponds to an entity private key of the authentication module (24), and the entity certificate is signed by the entity certification provider (18), and
- the user certification provider (18) corresponds to a user private key of the mobile device (14), and the user certificate is signed by the user certification provider (18).

4. The method according to claim 3, **characterised in that** the user private key is generated on the mobile device (14).

5. The method according to claim 1 to 4, **characterised in that** the entity (16) is a card issuer bank (25), and a contacting of a user (10) by submitting credit card data via the terminal (12) on a payment interface of a webshop is detected by means of a contact module (20) of the card issuer bank (25) via a server (30) of the webshop, via a server (32) of a banking service provider of the webshop, and via a server (34) of a credit card company.

6. The method according to claim 5, **characterised in that**, in case a communication channel is established between the mobile device (14) and the authentication module (24), payment data of the webshop are sent to the mobile device (14), and information on authorization or rejection of the payment data by the user (10) is received.

7. The method according to any of claims 1 to 6, **characterised by** detecting, by means of the contact module (20), a login contacting at the terminal (12) displaying a login interface of the entity (16), and accepting the login of the user (10) to the entity (16) in case the communication channel (114, 120, 122, 124) between the authentication module (24) and the mobile device (14) is established.

8. The method according to claim 7, **characterised in that**, after the login is performed,
- a contract to be signed by the user (10) and the entity (16) is prepared utilising the data requested from the user (10), and
- the contract is signed with a signature key of the entity (16) and with a signature key of the user (10) fetched from a key providing module (28).

9. The method according to any of claims 1 to 6, **characterised in that**
- a contacting for a document-signing is detected by means of the contact module (20),
- a contract signed by the entity (16) and to be signed by the user (10) is prepared utilising data requested from the user (10), and a hash of the contract is generated,
- the authentication module is a key providing module (28), and a network address of the key providing module (28) is sent to the mobile device (14) of the user (10) in an authentication message by means of the contact module (20), and the hash is sent encrypted in the authentication message,
- in case of establishing the communication channel between the mobile device (14) and the key providing module (28)
- the encrypted hash and an identifier of the entity (16) is sent to the key providing module (28),
- the entity (16) is identified by means of the key providing module (28), and the encrypted hash is decrypted by means of a key assigned to the entity (16), and then the hash is signed with a key of the user (10) being in possession of the key providing module (28), and
- the hash is sent to the entity (16) from the key providing module (28) by verifying with the entity (16) that the hash was received from the entity (16).

10. The method according to any of claims 1 to 6, **characterised in that**
- a contacting for a document decryption is detected by means of the contact module (20), during which the user (10) submits a document to be decrypted to the contact module (20),
- the authentication module is a key providing module (28), and the network address of the key providing module (28) is sent to the mobile device (14) of the user (10) in an authentication message by means of the contact module (20), which comprises encrypted symmetric key being encrypted by a symmetric key that is common with the entity (16),
- in case of establishing a communication channel between the mobile device (14) and the key providing module (28), the key providing module (28)
- identifies a decryption key of the user (10) by means of the user certificate,
- by means of a parameter identifying the contact module (20), retrieves from its database the symmetric key that is common with the entity (16), and generates the encrypted symmetric key by decryption by means of the symmetric key that is common with the entity (16),
- decrypts the encrypted symmetric key by means of the decryption key, and
- forwards the decrypted symmetric key to the contact module (20), and
- the contact module (20) decrypts the document to be decrypted by means of the symmetric key.

11. The method according to any of claims 1 to 10, **characterised in that** the certificate is an X.509-type certificate.

12. The method according to any of claims 1 to 11, **characterised in that** the communication channel is a two-sided SSL communication channel.

13. A system for authenticating a user (10) at an entity (16), comprising
- a contact module (20) adapted for detecting a contacting of the user (10) to the entity (16),
- a terminal (12) adapted for receiving the contacting initiated by the user (10) with the contact module (20),
- an authentication module (24) adapted for authenticating the user (10), and
- a mobile device (14) adapted for receiving a network address of the authentication module (24) in an authentication message from the contact module (20),
**characterised in that**
- the system further comprises a message queue module (26) corresponding to the entity (16), the authentication message is a message queue type message sent via the message queue module (26), and the mobile device (14) is adapted for sending a return receipt signed by a key of the user (10) to the contact module (20) after receiving the message queue type message, wherein the mobile device (14) is connected to the message queue module (26),
- the mobile device (14) is adapted for verifying acceptability of an entity certificate of the authentication module (24) based on the network address,
- the authentication module (24) is adapted for verifying acceptability of a user certificate of the mobile device (14), and
- in case the entity certificate and the user certificate are acceptable, the user (10) is authenticated at the entity (16) by the system by establishing a communication channel (114, 120, 122, 124) between the mobile device (14) and the authentication module (24), whereas in case the entity certificate or the user certificate is not acceptable, the user (10) is rejected at the entity (16).

## Patentansprüche

1. Ein Verfahren zur Authentifizierung eines Nutzers (10) an einer Einheit (16), umfassend die Schritte:
- Erfassen einer in einem Browser eines Terminals (12) gemachten Kontaktierung des Nutzers (10) mittels eines Kontaktmoduls (20) der Einheit (16), und
- Senden einer Netzwerkadresse eines Authentifizierungsmoduls (24) der Einheit (16) an ein mobiles Gerät (14) des Nutzers (10) in einer Authentifizierungsnachricht mittels des Kontaktmoduls (20),
**gekennzeichnet durch**
- Nutzen einer Queue-Typ-Nachricht als Authentifizierungsnachricht, wobei die genannte Nachricht mittels eines mit der Einheit (16) korrespondierenden Queue-Nachrichtenmoduls (26) gesendet wird, und wobei ein **durch** einen Schlüssel des Nutzers (10) signierter Rückschein von dem mobilen Gerät (14) zu dem Kontaktmodul (20) gesendet wird, nachdem die Queue-Typ-Nachricht von dem mobilen Gerät (14) empfangen worden ist, welches mit dem Queue-Nachrichtenmodul (26) verbunden ist,
- Verifizieren einer Akzeptierbarkeit eines Einheitszertifikats des Authentifizierungsmoduls (24) mittels des mobilen Geräts (14) basierend auf der Netzwerkadresse, und Verifizieren einer Akzeptierbarkeit eines Nutzerzertifikats des mobilen Geräts (14) mittels des Authentifizierungsmoduls (24), und
- in dem Fall, dass das Einheitszertifikat und das Nutzerzertifikat akzeptabel sind, Authentifizieren des Nutzers (10) an der Einheit (16) **durch** Aufbau eines Kommunikationskanals (114, 120, 122, 124) zwischen dem mobilen Gerät (14) und dem Authentifizierungsmodul (24), wohingegen in dem Fall, dass das Einheitszertifikat oder das Nutzerzertifikat nicht akzeptabel ist, Ablehnen des Nutzers (10) an der Einheit (16).

2. Das Verfahren nach Anspruch 1, **dadurch gekennzeichnet, dass**
- der Schritt des Verifizierens der Akzeptierbarkeit des Einheitszertifikats ein Verifizieren
- einer Validität des Einheitszertifikats bei einem Einheitszertifikat-Provider (18), und
- einer Vertrauenswürdigkeit des Einheitszertifikat-Providers (18), mittels des mobilen Geräts (14) umfasst,
- der Schritt des Verifizierens der Akzeptierbarkeit des Nutzerzertifikats ein Verifizieren
- einer Validität des Nutzerzertifikats bei dem Nutzerzertifikat-Provider (18) und
- einer Vertrauenswürdigkeit des Nutzerzertifikat-Providers (18) mittels des Authentifizierungsmoduls (24) umfasst.

3. Das Verfahren nach Anspruch 2, **dadurch gekennzeichnet dass**
- der Einheitszertifikat-Provider (18) mit einem privaten Einheitsschlüssel des Authentifizierungsmoduls (24) korrespondiert, und das Einheitszertifikat durch den Einheitszertifikat-Provider (18) signiert ist, und
- der Nutzerzertifikat-Provider (18) mit einem privaten Nutzerschlüssel des mobilen Geräts (14) korrespondiert, und das Nutzerzertifikat durch den Nutzerzertifikat-Provider (18) signiert ist.

4. Das Verfahren nach Anspruch 3, **dadurch gekennzeichnet dass** der private Nutzerschlüssel durch das mobile Gerät (14) generiert ist.

5. Das Verfahren nach Anspruch 1 bis 4, **dadurch gekennzeichnet, dass** die Einheit (16) eine Kartenherausgeberbank (25) ist, und eine Kontaktierung eines Nutzers (10) durch Eingeben von Kreditkartendaten über das Terminal (12) auf einem Zahlungsinterface eines Webshops mittels eines Kontaktmoduls (20) der Kartenherausgeberbank (120) über einen Server (30) des Webshops, über einen Server auf (32) eines Bank-Serviceproviders des Webshops und über einen Server (34) einer Kreditkartenfirma erfasst wird

6. Das Verfahren nach Anspruch 5, **dadurch gekennzeichnet, dass** in dem Fall, dass ein Kommunikationskanal zwischen dem mobilen Gerät (14) und dem Authentifizierungsmodul (24) aufgebaut wird, Zahlungsdaten des Webshops an das mobile Gerät (14) gesendet werden, und Informationen über ein Autorisieren oder Ablehnen der Zahlungsdaten durch den Nutzer (10) empfangen werden.

7. Das Verfahren nach einem der Ansprüche 1 bis 6, **gekennzeichnet durch** Erfassen eines Login-Kontaktierens an dem Terminal (12) mittels des Kontaktmoduls (20), Anzeigen eines Login-Interfaces der Einheit (16) und Akzeptieren des Logins des Nutzers (10) zu der Einheit (16) im Falle, dass der Kommunikationskanal (114, 120, 122, 124) zwischen dem Authentifizierungsmodul (24) und dem mobilen Gerät (14) aufgebaut ist.

8. Das Verfahren nach Anspruch 7, **dadurch gekennzeichnet, dass** nachdem der Login ausgeführt worden ist,
- ein durch den Nutzer (10) und die Einheit (16) zu signierender Vertrag angefertigt wird, wobei die von dem Nutzer (10) angeforderten Daten genutzt werden, und
- der Vertrag mit einem Unterschriftsschlüssel der Einheit (16) und mit einem Unterschriftsschlüssel des Nutzers (10), abgerufen von einem Schlüsselbereitstellungsmodul (28), signiert ist.

9. Das Verfahren nach einem der Ansprüche 1 bis 6, **dadurch gekennzeichnet, dass**
- eine Kontaktierung für eine Dokumenten-Unterschrift mittels des Kontaktmoduls (20) erfasst wird,
- ein Vertrag, welcher von der Einheit (16) signiert ist, und welcher von dem Nutzer (10) zu signieren ist, angefertigt wird, wobei von dem Nutzer (10) angeforderte Daten genutzt werden, und ein Hash des Vertrags generiert wird,
- das Authentifizierungsmodul ein Schlüsselbereitstellungsmodul (28) ist, und eine Netzwerkadresse des Schlüsselbereitstellungsmoduls (28) in einer Authentifizierungsnachricht mittels des Kontaktmoduls (20) an das mobile Gerät (14) des Nutzers (10) gesendet wird, und der Hash verschlüsselt in der Authentifizierungsnachricht gesendet wird,
- in dem Fall, dass ein Kommunikationskanal zwischen dem mobilen Gerät (14) und dem Schlüsselbereitstellungsmodul (28) aufgebaut wird
- der verschlüsselte Hash und ein Identifikator der Einheit (16) an das Schlüsselbereitstellungsmodul (28) gesendet wird,
- die Einheit (16) mittels des Schlüsselbereitstellungsmoduls (28) identifiziert wird, und der verschlüsselte Hash mittels eines der Einheit (16) zugeordneten Schlüssels entschlüsselt wird, und dann der Hash mit einem Schlüssel des Nutzers (10), welcher im Besitz des Schlüsselbereitstellungsmoduls (28) ist, signiert wird, und
- der Hash von dem Schlüsselbereitstellungsmodul (28) durch Verifizieren mit der Einheit (16), dass der Hash von der Einheit (16) empfangen worden ist, an die Einheit (16) gesendet wird.

10. Das Verfahren nach einem der Ansprüche 1 bis 6, **dadurch gekennzeichnet, dass**
- eine Kontaktierung für eine Dokumentenentschlüsselung mittels des Kontaktmoduls (20) erfasst wird, während der Nutzer (10) ein zu entschlüsselndes Dokument bei dem Kontaktmodul (20) einreicht,
- das Authentifizierungsmodul ein Schlüsselbereitstellungsmodul (28) ist, und die Netzwerkadresse des Schlüsselbereitstellungsmoduls (28) an das mobile Gerät (14) des Nutzers (10) in einer Authentifizierungsnachricht mittels des Kontaktmoduls (20) gesendet wird, welches einen verschlüsselten symmetrischen Schlüssel umfasst, welche durch einen symmetrischen Schlüssel verschlüsselt ist, was gemeinsam mit der Einheit (16) ist,
- in dem Fall, dass ein Kommunikationskanal zwischen dem mobilen Gerät (14) und dem Schlüsselbereitstellungsmodul (28) aufgebaut wird, dass Schlüsselbereitstellungsmodul (28)
- einen Entschlüsselungs-Schlüssel des Nutzers (10) mittels des Nutzerzertifikates identifiziert,
- mittels eines Parameters, welcher das Kontaktmodul (20) identifiziert, den symmetrischen Schlüssel, der gemeinsam mit der Einheit (16) ist, von seiner Datenbank abruft, und den verschlüsselten symmetrischen Schlüssel generiert, indem mittels des symmetrischen Schlüssels, der gemeinsam mit der Einheit (16) ist, entschlüsselt wird,
- den verschlüsselten symmetrischen Schlüssel mittels des entschlüsselten Schlüssels entschlüsselt, und
- den entschlüsselten symmetrischen Schlüssel an das Kontaktmodul (20) weiterleitet, und
- das Kontaktmodul (20) das zu entschlüsselnde Dokument mittels des symmetrischen Schlüssels entschlüsselt.

11. Das Verfahren nach einem der Ansprüche 1 bis 10, **dadurch gekennzeichnet, dass** das Zertifikat ein X.509-type-Zertifikat ist.

12. Das Verfahren nach einem der Ansprüche 1 bis 11, **dadurch gekennzeichnet dass** der Kommunikationskanal ein zweiseitiger SSL-Kommunikationskanal ist.

13. Ein System zur Authentifizierung eines Nutzers (10) an einer Einheit (16), umfassend
- ein Kontaktmodul (20), welches dazu eingerichtet ist, eine Kontaktierung eines Nutzers (10) an der Einheit (16) zu erfassen,
- ein Terminal (12), welches dazu eingerichtet ist, eine Kontaktierung welche durch den Nutzer (10) mit dem Kontaktmodul (20) eingeleitet worden ist, zu empfangen,
- ein Authentifizierungsmodul (24), welches dazu eingerichtet ist, den Nutzer (10) zu authentifizieren, und
- ein mobiles Gerät (14), welches dazu eingerichtet ist, eine Netzwerkadresse des Authentifizierungsmoduls (24) in einer Authentifizierungsnachricht von dem Kontaktmodul (20) zu empfangen,
**dadurch gekennzeichnet dass**,
- das System weiterhin ein mit der Einheit (16) korrespondierendes Queue-Nachrichtenmodul (26) umfasst, wobei die Authentifizierungsnachricht eine Queue-Typ-Nachricht ist, welche über das Queue-Nachrichtenmodul (26) gesendet worden ist, und wobei das mobile Gerät (14) dazu eingerichtet ist, einen durch einen Schlüssel des Nutzers (10) signierten Rückschein an das Kontaktmodul (20) zu senden, nachdem die Queue-Typ-Nachricht empfangen worden ist, wobei das mobile Gerät (14) mit dem Queue-Nachrichtenmodul (26) verbunden ist,
- das mobile Gerät (14) dazu eingerichtet ist, eine Akzeptierbarkeit eines Einheitszertifikats des Authentifizierungsmoduls (24) basierend auf der Netzwerkadresse zu verifizieren,
- das Authentifizierungsmodul (24) dazu eingerichtet ist, die Akzeptierbarkeit eines Nutzerzertifikats des mobilen Geräts (14) zu verifizieren, und
- in dem Fall, dass das Einheitszertifikat und das Nutzerzertifikat akzeptabel sind, der Nutzer (10) an der Einheit (16) durch das System authentifiziert wird, indem ein Kommunikationskanal (114, 120, 122, 124) zwischen dem mobilen Gerät (14) und dem Authentifizierungsmodul (24) aufgebaut wird, wohingegen in dem Fall, dass das Einheitszertifikat oder das Nutzerzertifikat nicht akzeptabel ist, der Nutzer (10) an der Einheit (16) abgelehnt wird.

## Revendications

1. Procédé pour authentifier un utilisateur (10) au niveau d'une entité (16), comprenant les étapes de
- détecter, au moyen d'un module de contact (20) de l'entité (16), un contact de l'utilisateur (10) réalisé dans un navigateur d'un terminal (12), et
- envoyer, au moyen du module de contact (20), une adresse de réseau d'un module d'authentification (24) de l'entité (16) à un dispositif mobile (14) de l'utilisateur (10) dans un message d'authentification, **caractérisé par**
- utiliser un message de type file d'attente de messages comme le message d'authentification, ledit message est envoyé via un module de file d'attente de messages (26) correspondant à l'entité (26), et un reçu de retour signé par une clé de l'utilisateur (10) est envoyé du dispositif mobile (14) au module de contact (20) après que le message de type file d'attente de messages a été reçu par le dispositif mobile (14) étant connecté au module de file d'attente de messages (26),
- vérifier l'acceptabilité d'un certificat d'entité du module d'authentification (24) au moyen du dispositif mobile (14) sur la base de l'adresse de réseau, et vérifier l'acceptabilité d'un certificat d'utilisateur du dispositif mobile (14) au moyen du module d'authentification (24), et
- dans le cas où le certificat d'entité et le certificat d'utilisateur sont acceptables, authentifier l'utilisateur (10) au niveau de l'entité (16) en établissant un canal de communication (114, 120, 122, 124) entre le dispositif mobile (14) et le module d'authentification (24), alors que dans le cas où le certificat d'entité ou le certificat d'utilisateur n'est pas acceptable, rejeter l'utilisateur (10)au niveau de l'entité (16).

2. Procédé selon la revendication 1, **caractérise en ce que**
- l'étape de vérification de l'acceptabilité du certificat d'entité comprend de vérifier au moyen du dispositif mobile (14)
- la validité du certificat d'entité au niveau d'un fournisseur de certification d'entité (18), et
- la fiabilité du fournisseur de certificat d'entité (18),
- l'étape de vérification de l'acceptabilité du certificat d'utilisateur comprend de vérifier au moyen du module d'authentification (24),
- la validité du certificat d'utilisateur au niveau du fournisseur de certification d'utilisateur (18), et
- la fiabilité du fournisseur de certification d'utilisateur (18).

3. Procédé selon la revendication 2, **caractérisé en ce que**
- le fournisseur de certification d'entité (18) correspond à une clé privée d'entité du module d'authentification (24), et le certificat d'entité est signé par le fournisseur de certification d'entité (18), et
- le fournisseur de certification d'utilisateur (18) correspond à une clé privée d'utilisateur du dispositif mobile (14), et le certificat d'utilisateur est signé par le fournisseur de certification d'utilisateur (18).

4. Procédé selon la revendication 3, **caractérisé en ce que** la clé privée d'utilisateur est générée sur le dispositif mobile (14).

5. Procédé selon les revendications 1 à 4, **caractérisé en ce que** l'entité (16) est une banque émettrice de cartes (25), et un contact d'un utilisateur (10) en soumettant des données de carte de crédit via le terminal (12) sur une interface de paiement d'une boutique en ligne est détecté au moyen d'un module de contact (20) de la banque émettrice de carte (25) via un serveur (30) de la boutique en ligne, via un serveur (32) d'un fournisseur de services bancaires de la boutique en ligne, et via un serveur (34) d'une société émettrice de carte de crédit.

6. Procédé selon la revendication 5, **caractérisé en ce que**, dans un cas où un canal de communication est établi entre le dispositif mobile (14) et le module d'authentification (24), des données de paiement de la boutique en ligne sont envoyées au dispositif mobile (14), et des informations concernant l'autorisation ou le rejet des données de paiement par l'utilisateur (10) sont reçues.

7. Procédé selon l'une quelconque des revendications 1 à 6, **caractérisé par** la détection, au moyen du module de contact (20), d'un contact de connexion au niveau du terminal (12) affichant une interface de connexion de l'entité (16), et l'acceptation de la connexion de l'utilisateur (10) à l'entité (16) dans le cas où le canal de communication (114, 120, 122, 124) entre le module d'authentification (24) et le dispositif mobile (14) est établi.

8. Procédé selon la revendication 7, **caractérisé en ce que**, après que la connexion a été établie,
- un contrat à signer par l'utilisateur (10) et l'entité (16) est préparé en utilisant les données demandées à l'utilisateur (10), et
- le contrat est signé avec une clé de signature de l'entité (16) et avec une clé de signature de l'utilisateur (10) extraite d'un module de fourniture de clé (28).

9. Procédé selon l'une quelconque des revendications 1 à 6, **caractérisé en ce que**
- un contact en vue d'une signature de document est détecté au moyen du module de contact (20),
- un contrat signé par l'entité (16) et à signer par l'utilisateur (10) est préparé en utilisant des données demandées à l'utilisateur (10), et un hachage du contrat est généré,
- le module d'authentification est un module de fourniture de clé (28), et une adresse de réseau du module de fourniture de clé (28) est envoyée au dispositif mobile (14) de l'utilisateur (10) dans un message d'authentification au moyen du module de contact (20), et le hachage est envoyé crypté dans le message d'authentification,
- en cas d'établissement du canal de communication entre le dispositif mobile (14) et le module de fourniture de clé (28)
- le hachage crypté et un identifiant de l'entité (16) sont envoyés au module de fourniture de clé (28),
- l'entité (16) est identifiée au moyen du module de fourniture de clé (28), et le hachage crypté est décrypté au moyen d'une clé attribuée à l'entité (16), et ensuite le hachage est signé avec une clé de l'utilisateur (10) étant en possession du module de fourniture de clé (28), et
- le hachage est envoyé du module de fourniture clé (28) à l'entité (16) en vérifiant avec l'entité (16) que le hachage a été reçu par l'entité (16).

10. Procédé selon l'une quelconque des revendications 1 à 6, **caractérisé en ce que**
- un contact en vue d'un décryptage de document est détecté au moyen du module de contact (20), pendant lequel l'utilisateur (10) soumet un document à décrypter au module de contact (20),
- le module d'authentification est un module de fourniture de clé (28), et l'adresse de réseau du module de fourniture de clé (28) est envoyée au dispositif mobile (14) de l'utilisateur (10) dans un message d'authentification au moyen du module de contact (20), qui comprend une clé symétrique cryptée étant cryptée par une clé symétrique qui est commune avec l'entité (16),
- en cas d'établissement d'un canal de communication entre le dispositif mobile (14) et le module de fourniture de clé (28), le module de fourniture de clé (28)
- identifie une clé de décryptage de l'utilisateur (10) au moyen du certificat d'utilisateur,
- au moyen d'un paramètre identifiant le module de contact (20), récupère dans sa base de données la clé symétrique qui est commune avec l'entité (16), et génère la clé symétrique cryptée par décryptage au moyen de la clé symétrique qui est commune avec l'entité (16),
- décrypte la clé symétrique cryptée au moyen de la clé de décryptage, et
- transfère la clé symétrique décryptée au module de contact (20), et
- le module de contact (20) décrypte le document à décrypter au moyen de la clé symétrique.

11. Procédé selon l'une quelconque des revendications 1 à 10, **caractérisé en ce que** le certificat est un certificat de type X.509.

12. Procédé selon l'une quelconque des revendications 1 à 11, **caractérisé en ce que** le canal de communication est un canal de communication SSL bidirectionnelle.

13. Système pour authentifier un utilisateur (10) au niveau d'une entité (16), comprenant
- un module de contact (20) adapté pour détecter un contact de l'utilisateur (10) avec l'entité (16),
- un terminal (12) adapté pour recevoir le contact initié par l'utilisateur (10) avec le module de contact (20),
- un module d'authentification (24) adapté pour authentifier l'utilisateur (10), et
- un dispositif mobile (14) adapté pour recevoir une adresse de réseau du module d'authentification (24) dans un message d'authentification provenant du module de contact (20),
**caractérisé en ce que**
- le système comprend en outre un module de file d'attente de messages (26) correspondant à l'entité (16), le message d'authentification est un message de type file d'attente de messages envoyé via le module de file d'attente de messages (26), et le dispositif mobile (14) est adapté pour envoyer au module de contact (20) un reçu de retour signé par une clé de l'utilisateur (10) après réception du message de type file d'attente de messages, dans lequel le dispositif mobile (14) est connecté au module de file d'attente de messages (26),
- le dispositif mobile (14) est adapté pour vérifier l'acceptabilité d'un certificat d'entité du module d'authentification (24) sur la base de l'adresse de réseau,
- le module d'authentification (24) est adapté pour vérifier l'acceptabilité d'un certificat d'utilisateur du dispositif mobile (14), et
- dans le cas où le certificat d'entité et le certificat d'utilisateur sont acceptables, l'utilisateur (10) est authentifié au niveau de l'entité (16) par le système en établissant un canal de communication (114, 120, 122, 124) entre le dispositif mobile (14) et le module d'authentification (24), alors que dans le cas où le certificat d'entité ou le certificat d'utilisateur n'est pas acceptable, l'utilisateur (10) est rejeté au niveau de l'entité (16).
